# EUROPEAN PATENT SPECIFICATION

(11) **EP 2 587 143 B1**
(45) Date of publication and mention of the grant of the patent: **12.02.2020**
(21) Application number: 11798003.7
(22) Date of filing: 13.06.2011
(51) Int. Cl.: F22D 1/02, F23J 15/06, F22D 1/00, F22D 1/12, F28D 19/04

(54) **EXHAUST GAS RESIDUAL HEAT RECOVERY DEVICE**
ABGASRESTWÄRME-WIEDERHERSTELLUNGSVORRICHTUNG
DISPOSITIF DE RÉCUPÉRATION DE CHALEUR RÉSIDUELLE D'EFFLUENT GAZEUX

(30) Priority: 25.06.2010 JP 2010144718
(43) Date of publication of application: 01.05.2013
(73) Proprietor: Mitsubishi Heavy Industries, Ltd., Tokyo 108-8215 (JP)
(72) Inventor: ICHIHARA, Tarou, Tokyo 108-8215 (JP); TERAMOTO, Kenshu, Tokyo 108-8215 (JP); SUGITA, Ryosuke, Tokyo 108-8215 (JP)
(74) Representative: Henkel & Partner mbB
(86) International application number: PCT/JP2011/063463
(87) International publication number: WO 2011/162117

(56) References cited:
- EP-A1- 1 132 594
- WO-A1-93/12386
- JP-A- 2001 153 301
- JP-A- 2001 208 302
- JP-A- 2009 264 663
- JP-A- 2009 264 663
- US-A- 5 368 096

## Description

### BACKGROUND OF THE INVENTION

### Field of the Invention

The present invention relates to a device for recovering residual heat from exhaust gas. Particularly, the present invention relates to a device for recovering residual heat from exhaust gas that includes a dry economizer which heats to-be-heated water by utilizing sensible heat of the exhaust gas, the dry economizer being provided in a duct extending to a funnel through which the exhaust gas is emitted to atmosphere; and a condensation economizer which heats to-be-heated water by utilizing latent heat of condensation of the exhaust gas, the condensation economizer being provided on the downstream side of the dry economizer.

### Description of the Related Art

In related art, in a duct through which the exhaust gas from a boiler is circulated, an economizer is provided which heats a boiler water supply (to-be-heated water) using residual heat of the exhaust gas. The economizer recovers the residual heat of the exhaust gas by performing a heat exchange with the boiler water supply. Particularly, a condensation economizer has a configuration that is also able to recover latent heat discharged when vapor in the exhaust gas is condensed and becomes water. Thus, by using the condensation economizer together with a dry economizer that mainly recovers the sensible heat of the exhaust gas, the residual heat is able to be further recovered, which is capable of improving heating efficiency of the boiler.

As the device for recovering residual heat from exhaust gas, for example, JP 11-118104 A discloses a boiler in which, in a duct through which the exhaust gas of a downward flow is circulated, a dry economizer, an air preheater, and a condensation economizer are sequentially disposed in series. JP 11-118104 A, residual quantity of heat contained in the exhaust gas passed through the dry economizer is able to be recovered by a tubular air preheater, and the condensation economizer. Furthermore, in a water pipe group that is a major component of the condensation economizer, condensation is promoted, and a slightly wet portion partially exists.

Furthermore, JP 2001-208302 A discloses a condensation economizer in which a sensible heat transfer area and a condensation heat transfer area are alternately provided in a duct through which the exhaust gas of downstream flow is circulated. Specifically, JP 2001-208302 A2, a fin tube, through which a boiler water supply is circulated, is arranged in multiple stages, a front stage of the multi-stage fin tube is set to a sensible heat transfer area of a high temperature, a middle stage thereof is set to a condensation heat transfer area, and a rear stage thereof is set to a sensible heat transfer area of a low temperature, whereby the sensible heat and the latent heat of the exhaust gas are recovered in each heat transfer area.

JP 2009 264663 A discloses a device for recovering heat from an exhaust gas comprising a first heat exchanger and a second heat exchanger arranged in an exhaust gas passage. The first heat exchanger is positioned upstream of the second heat exchanger with respect to the flow direction of the exhaust gas and is provided in a part of the exhaust gas passage in which the exhaust gas is directed to flow upward. The second heat exchanger is provided in a part of the passage in which the exhaust gas is directed to flow downward. Through the passage the exhaust gas is conveyed to a funnel from which it is discharged to the atmosphere. Further, JP 2009 264663 A comprises a bypass passage through which the exhaust gas can bypass the first and the second heat exchanger. US 5368096 A discloses a condensing heat exchanger scrubbing system for cleaning a flue gas flowing through a passage. The system comprises a condensing heat exchanger disposed in a condensing section of the passage and a cooling heat exchanger disposed in a cooling section of the passage. The condensing heat exchanger is disposed downstream of the cooling heat exchanger with respect to the flow direction of the flue gas. In the condensing section a sieve tray is provided in the passage in order to provide additional contact between the flue gas and condensate generated by the condensing heat exchanger. After passing through the passage the flue gas is discharged.

However, since the condensation economizer of the boiler of JP 11-118104 A is disposed in the duct through which the exhaust gas of downstream flow is circulated and a partial wet portion is generated in the water pipe group by the condensation of vapor in the exhaust gas, the water pipe group has a wet area and a dry area. The wet area and the dry area are changed in position along with a change in boiler load. That is, when the boiler load is changed, the temperature of the exhaust gas passing through the condensation economizer is changed. Thus, a position, where the exhaust gas amounts to a condensation temperature, is changed, a boundary position between the wet area and the dry area is changed. Accordingly, since the exhaust gas flows from the upside, the dry area is generated in the upper part of the condensation economizer, the wet area is generated in the lower part thereof, and a zone, where the drying and the wetting are repeated, is generated in the middle part thereof. In the middle part, the water pipe group repeats the cooling and the heating, and thus there is a possibility that stress corrosion cracking (SCC) may occur in the water pipe.

Furthermore, JP 2001-208302 A, since the sensible heat transfer area and the condensation heat transfer area are alternately provided, the structure is complicated and the apparatus increases in size. In addition, since it is feared that the position of the condensation heat transfer area is changed due to a change in boiler load, similarly to JP 11-118104 A, a zone is generated where the drying and the wetting are repeated, whereby there is a possibility of the stress corrosion cracking being generated.

The present invention was made in view of the above circumstances, and an object thereof is to provide a device for recovering residual heat from exhaust gas that has a simple structure and is able to prevent the drying and wetting cycle in the condensation economizer.

### SUMMARY OF THE INVENTION

According to the present invention, the device for recovering residual heat from exhaust gas comprises the features of claim 1. The device for recovering residual heat from exhaust gas comprises a dry economizer which heats to-be-heated water by utilizing sensible heat of the exhaust gas, the dry economizer being provided in a duct extending to a funnel through which the exhaust gas is emitted to atmosphere; and a condensation economizer which heats to-be-heated water by utilizing latent heat of condensation of the exhaust gas, the condensation economizer being provided on the downstream side of the dry economizer, wherein the duct comprises an upstream duct in which the dry economizer is provided and a downstream duct connected to the upstream duct and directing the exhaust gas to flow upward, and wherein the condensation economizer is arranged in the downstream duct so that temperature of the exhaust gas amounts to condensation temperature at a vicinity of an upper part of the condensation economizer.

In the device for recovering residual heat from exhaust gas, the condensation economizer is provided in a downstream duct that directs the exhaust gas to flow upward, and the device is configured so that temperature of the exhaust gas amounts to condensation temperature at a vicinity of the upper part of the condensation economizer. Thus, vapor in the exhaust gas is condensed in the vicinity of the upper part of the condensation economizer, and becomes a drain (condensed water). The generated drain falls down from vicinity of the upper part of the condensation economizer and comes into contact with the water pipe group constituting the condensation economizer, and thus, the outer wall of the water pipes is kept in a wet state from the upper part to the lower part. For this reason, the drying and wetting cycle is able to be prevented in the water pipe group in the condensation economizer, which is able to prevent the stress corrosion cracking.

Furthermore, when falling down from the vicinity of the upper part of the condensation economizer, since the generated drain comes into contact with the water pipe group and falls down so as to face the exhaust gas of the upward flow, it is possible to increase partial pressure of the vapor in the exhaust gas flowing in the condensation economizer. For this reason, the condensation amount of the condensation economizer is increased, the condensation efficiency rises, and the residual heat recovery rate of the exhaust gas rises.

In addition, the device for recovering residual heat from exhaust gas has a configuration in which the upstream duct is provided with the dry economizer and the condensation economizer is provided in the downstream duct which is connected to the upstream duct and directs the exhaust gas to flow upward. Thus, the device is able to be simply configured.

Preferably, the device for recovering residual heat further comprises: a white-smoke detector which detects white smoke of the exhaust gas emitted to the atmosphere through the funnel; a heater which heats the exhaust gas on the downstream side of the condensation economizer in a flow direction of the exhaust gas by heat transfer from the exhaust gas in the upstream duct to the downstream side of the condensation economizer; and a heating controller which controls heating condition of the heater based on detection result of the white-smoke detector.

Generally, since, in the exhaust gas, vapor in the exhaust gas is cooled and changed to water droplets, when the exhaust gas is discharged from the funnel to the atmosphere as it is, white smoke is easily generated. For that reason, in the device for recovering residual heat from exhaust gas, the exhaust gas heat of the upstream duct is transferred to the downstream side of the exhaust gas flow of the condensation economizer, and the exhaust gas of the downstream side of the exhaust gas flow of the condensation economizer is heated. As a result, it is possible to raise the temperature of the exhaust gas of the downstream side of the exhaust gas flow of the condensation economizer to lower the relative humidity of the gas after the mixture, which is able to suppress the occurrence of white smoke.

Furthermore, since it is possible to control the heating state of the heater based on the detection result of the white-smoke detector that detects white smoke of the exhaust gas emitted from the funnel to the atmosphere, the temperature of the exhaust gas is able to be adjusted so that the white smoke is not generated.

In the aforementioned case, the heater may be a gas heater which comprises: a heat recovery section at which residual heat of the exhaust gas is recovered by a heat exchanger plate on the downstream side of the dry economizer in the exhaust gas flow; and a reheating section at which the exhaust gas is reheated on the downstream side of the condensation economizer by the residual heat having been recovered by means of the heat exchanger plate at the heat recovery section, the gas heater rotating the heat exchanger plate so as to be placed in the heat recovery section and the reheating section alternately, and the heating controller may increase the rotational speed of the heat exchanger plate with the increase in concentration of the white smoke based on the detection result of the white-smoke detector.

As a result, since the exhaust gas heat of the upstream duct is able to be transferred to the downstream side of the exhaust gas flow of the condensation economizer and the exhaust gas is able to be reheated on the downstream side of the exhaust gas flow of the condensation economizer, an occurrence of white smoke is able to be suppressed. Furthermore, since the exhaust gas heat of the upstream duct to be transferred to the downstream side of the exhaust gas flow of the condensation economizer is able to be obtained by being recovered in the heat recovery section, the temperature of the exhaust gas of the downstream side of the exhaust gas flow of the dry economizer is able to be lowered. Thus, the temperature of the exhaust gas is able to be lowered before flowing into the condensation economizer, whereby the exhaust gas is easily condensed by the condensation economizer.

Furthermore, since the rotational speed of the gas heater is raised with the increase in concentration of the white smoke based on the detection result of the white-smoke detector, the temperature of the exhaust gas is able to be effectively regulated so that white smoke is not generated.

Alternatively, the heater may comprise: a bypass channel through which the upstream duct is in communication with the downstream duct so that a portion of the exhaust gas in the upstream duct flows into the downstream side of the condensation economizer; and a damper which adjusts flow rate of the portion of the exhaust gas flowing in the bypass channel, and the heating controller may increase the opening amount of the damper with the increase in concentration of the white smoke based on the detection result of the white-smoke detector.

As a result, since a portion of the exhaust gas in the upstream duct is capable of jointly flowing into the downstream side of the exhaust gas flow of the condensation economizer, it is possible to raise the temperature of the exhaust gas of the downstream side of the exhaust gas flow of the condensation economizer, thereby suppressing an occurrence of white smoke.

Furthermore, since the opening amount of the damper is able to be increased with the increase in concentration of the white smoke based on the detection result of the white-smoke detector, the flow rate of the exhaust gas of the bypass flow channel is able to be adjusted so that the white smoke is not generated. Thus, the temperature of the exhaust gas is able to be effectively adjusted.

In addition, the heater including the bypass channel and the damper has a simple structure and is able to reduce the equipment cost.

Moreover, the device for recovering residual heat may further comprise a spray nozzle which sprays water to the exhaust gas flowing in the condensation economizer, and the water sprayed to the exhaust gas by the spray nozzle may have a temperature between an the inlet temperature and the outlet temperature of the to-be-heated water in the condensation economizer.

Thus, since water is sprayed toward the exhaust gas flowing in the condensation economizer, it is possible to further improve the vapor partial pressure in the exhaust gas flowing in the condensation economizer. For this reason, the condensation amount in the condensation economizer is increased and the condensation efficiency is raised, whereby the residual heat recovery rate of the exhaust is raised.

Furthermore, since the temperature of water to be sprayed into the exhaust gas by the spray nozzle is set to a temperature between the inlet temperature and the outlet temperature of the to-be-heated water to the condensation economizer, a decline in condensation efficiency is able to be prevented without rapidly cooling the exhaust gas.

Further, it is preferable that the to-be-heated water flows in the dry economizer and the condensation economizer in a direction that is opposite to a direction of the exhaust gas.

Thus, since the flow direction of the to-be-heated water flowing in the dry economizer and the condensation economizer is provided so as to face the flow direction of the exhaust gas, the heat recovery efficiency is able to be improved.

In the present invention, the condensation economizer is provided in a downstream duct that directs the exhaust gas to flow upward, and the device is configured so that temperature of the exhaust gas amounts to condensation temperature at a vicinity of the upper part of the condensation economizer. Thus, vapor in the exhaust gas is condensed in the vicinity of the upper part of the condensation economizer, and becomes a drain. The generated drain falls down from vicinity of the upper part of the condensation economizer and comes into contact with the water pipe group constituting the condensation economizer, and thus, the outer wall of the water pipes is kept in a wet state from the upper part to the lower part. For this reason, the drying and wetting cycle is able to be prevented in the water pipe group in the condensation economizer, which is able to prevent the stress corrosion cracking.

Furthermore, when falling down from the vicinity of the upper part of the condensation economizer, since the generated drain comes into contact with the water pipe group and falls down so as to face the exhaust gas of the upward flow, it is possible to increase partial pressure of the vapor in the exhaust gas flowing in the condensation economizer. For this reason, the condensation amount in the condensation economizer is increased, the condensation efficiency rises, and the residual heat recovery rate of the exhaust gas rises.

In addition, the device for recovering residual heat from exhaust gas has a configuration in which the upstream duct is provided with the dry economizer and the condensation economizer is provided in the downstream duct which is connected to the upstream duct and directs the exhaust gas to flow upward. Thus, the device is able to be simply configured.

### BRIEF DESCRIPTION OF THE DRAWINGS

Fig. 1 is a schematic configuration diagram that illustrates an example of the device for recovering residual heat from exhaust gas according to a first embodiment.
Figs. 2A to 2C are schematic diagrams that illustrate installation examples of a spray nozzle.
Figs. 3A and 3B are schematic configuration diagrams that illustrate modified examples of the device for recovering residual heat from exhaust gas according to the first embodiment.
Fig. 4 is a schematic configuration diagram that illustrates an example of a device for recovering residual heat from exhaust gas according to a second embodiment.
Fig. 5 is a schematic configuration diagram that illustrates an example of a device for recovering residual heat from exhaust gas according to a third embodiment.

### DESCRIPTION OF THE PREFERRED EMBODIMENTS

Hereinafter, preferred embodiments of the present invention will be described in detail with reference to the drawings. However, sizes, materials, shapes, relative dispositions or the like of components described in the present embodiment do not purport to limit the scope of the present invention thereto but are mere description examples unless specifically described.

### First Embodiment

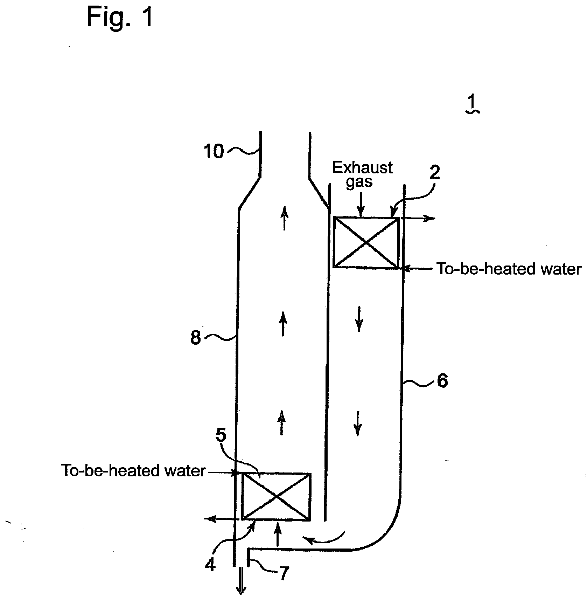

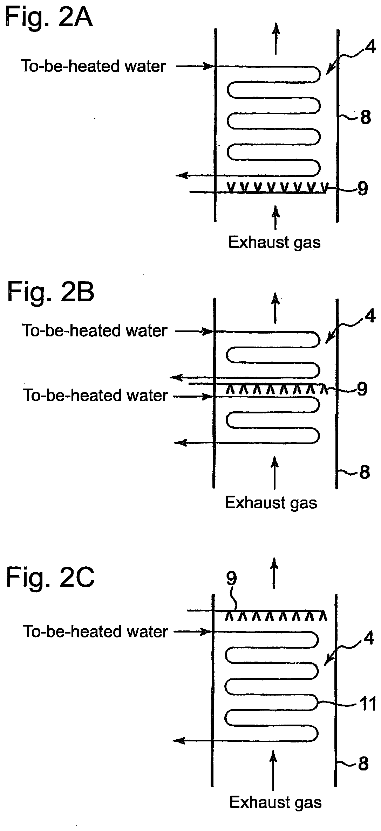

Fig. 1 is a schematic configuration diagram that illustrates an example of the device for recovering residual heat from exhaust gas according to a first embodiment of the present invention. Fig. 2 is a schematic diagram that illustrates an installation example of a spray nozzle provided at the vicinity of a condensation economizer.

The device 1 for recovering residual heat from exhaust gas according to the present invention is provided in a duct connected to a funnel 10 that discharges the exhaust gas from a boiler to the atmosphere. As shown in Fig. 1, the device 1 for recovering residual heat from exhaust gas mainly includes a dry economizer 2 and a condensation economizer 4.

The dry economizer 2 and the condensation economizer 4 include a water pipe through which the to-be-heated water (a boiler water) is circulated. A material of the water pipe preferably uses SUS316L added with molybdenum in austenitic stainless steel from the viewpoint of improving a corrosion resistance.

The dry economizer 2 heats the to-be heated water using the sensible heat of the exhaust gas, and is provided on the upstream side (an upstream duct 6) of the duct. The exhaust gas subjected to the heat exchange with the to-be-heated water in the dry economizer 2 drops in temperature owing to residual heat recovery. For example, when the temperature of the exhaust gas flowing in the dry economizer 2 is 300°C, the temperature of the exhaust gas flowing out of the dry economizer 2 drops to 180°C. In this case, for example, the inlet temperature of the to-be-heated water to the dry economizer 2 may be 150°C, and the outlet temperature thereof may be 250°C.

The condensation economizer 4 is arranged on the downstream side of the dry economizer 2 to heat the to-be-heated water using the latent heat of the condensation of the exhaust gas, and is provided on the downstream side (the downstream duct 8) of the duct. The downstream duct 8 is connected to the upstream duct 6 to direct the exhaust gas to flow upward. The condensation economizer 4 is provided so that the exhaust gas amounts to the condensation temperature at the vicinity of the upper part 5. In the present embodiment, the condensation temperature of the exhaust gas is 58 to 62°C. For example, another dry economizer, which lowers the temperature of the exhaust gas, may be provided on the upstream side of the condensation economizer 4 so that the exhaust gas amounts to the condensation temperature at the vicinity of the upper part 5 of the condensation economizer 4.

In addition, the flow direction of the to-be-heated water flowing in the dry economizer 2 and the condensation economizer 4 is provided so as to face the flow direction of the exhaust gas.

Thus, since the flow direction of the to-be-heated water flowing in the dry economizer 2 and the condensation economizer 4 is provided so as to face the flow direction of the exhaust gas, the heat recovery efficiency can be improved.

In this manner, the device 1 for recovering residual heat from exhaust gas mentioned above is configured such that the condensation economizer 4 is provided in the downstream duct 8 directing the exhaust gas to flow upward, and the exhaust gas amounts to the condensation temperature at the vicinity of the upper part 5 of the condensation economizer 4. Thus, vapor in the exhaust gas is condensed at the vicinity of the upper part 5 of the condensation economizer 4 and becomes the drain (the condensed water).

Since the generated drain falls down from the vicinity of the upper part 5 of the condensation economizer and comes into contact with the water pipe group constituting the condensation economizer 4, the outer wall of the water pipes is kept in the wet state from the upper part to the lower part. For this reason, the drying and wetting cycle is able to be prevented in the water pipe group of the condensation economizer 4, whereby the stress corrosion cracking is able to be prevented.

Furthermore, since the generated drain falls down so as to come into contact with the water pipe group and face the exhaust gas of the upward flow when falling down from the vicinity of the upper part 5 of the condensation economizer 4, it is possible to increase the partial pressure of vapor in the exhaust gas flowing in the condensation economizer 4. For this reason, the condensation amount in the condensation economizer is increased, the condensation efficiency rises, and the residual heat recovery rate of the exhaust gas rises.

In addition, the drain comes into contact with the water pipe group of the condensation economizer 4 or the exhaust gas of the upward flow, and then is discharged from the drain outlet 7.

In addition, since the device 1 for recovering residual heat from exhaust gas of the present embodiment is configured such that the condensation economizer 4 is provided in the upstream duct 6 provided with the dry economizer 2 and in the downstream duct 8 that is connected to the upstream duct 6 and directs the exhaust gas to flow upward, it is possible to easily assemble and manufacture the device for recovering residual heat.

Furthermore, as shown in Fig. 2, the device 1 for recovering residual heat from exhaust gas may include a spray nozzle 9 that sprays water toward the exhaust gas flowing in the condensation economizer 4.

As shown in Fig. 2A, the spray nozzle 9 may be provided on the lower part side (the exhaust gas flow upstream side) of the condensation economizer 4, and, as shown in Fig. 2B, the spray nozzle 9 may be provided in an inner part of the condensation economizer 4. Furthermore, as shown in Fig. 2C, the spray nozzle 9 may be provided on an upper part side (the exhaust gas flow downstream side) of the condensation economizer 4.

Thus, since water is sprayed toward the exhaust gas flowing in the condensation economizer 4, it is possible to further increase the partial pressure of vapor in the exhaust gas flowing in the condensation economizer 4. For this reason, the condensation amount in the condensation economizer 4 is increased, the condensation efficiency rises, and the residual heat recovery rate of the exhaust gas rises.

Particularly, as shown in Fig. 2C, when the spray nozzle 9 is provided in the upper part side of the condensation economizer 4, it is possible to expect that the drying of the water pipe 11 constituting the condensation economizer 4 is prevented, whereby the outer wall of the water pipe 11 is generally kept in the wet state. Thus, it is possible to increase the partial pressure of vapor in the exhaust gas and prevent the drying and wetting cycle in the condensation economizer 4, which is able to effectively prevent the stress corrosion cracking.

In addition, the temperature of water to be sprayed to the exhaust gas by the spray nozzle 9 is set to a temperature between the inlet temperature and the outlet temperature of the to-be-heated water to the condensation economizer 4.

For example, when the inlet temperature of the to-be-heated water to the condensation economizer 4 is 20°C, and the outlet temperature thereof is 60°C, as shown in Fig. 2A, the temperature of water to be sprayed from the lower part side of the condensation economizer 4 may be 55°C. Furthermore, as shown in Fig. 2C, the temperature of water to be sprayed from the upper part side of the condensation economizer 4 may be 20°C.

Thus, since the temperature of water to be sprayed to the exhaust gas by the spray nozzle is set to the temperature between the inlet temperature and the outlet temperature of the to-be-heated water to the condensation economizer, it is possible to prevent a decline in condensation efficiency without rapidly cooling the exhaust gas.

In the embodiment mentioned above, although the upstream duct 6 having the exhaust gas flow of the downward flow is described as an installation example of the dry economizer 2, the installation location of the dry economizer 2 is not particularly limited, if the location is within the duct having the exhaust gas flow of one direction flow.

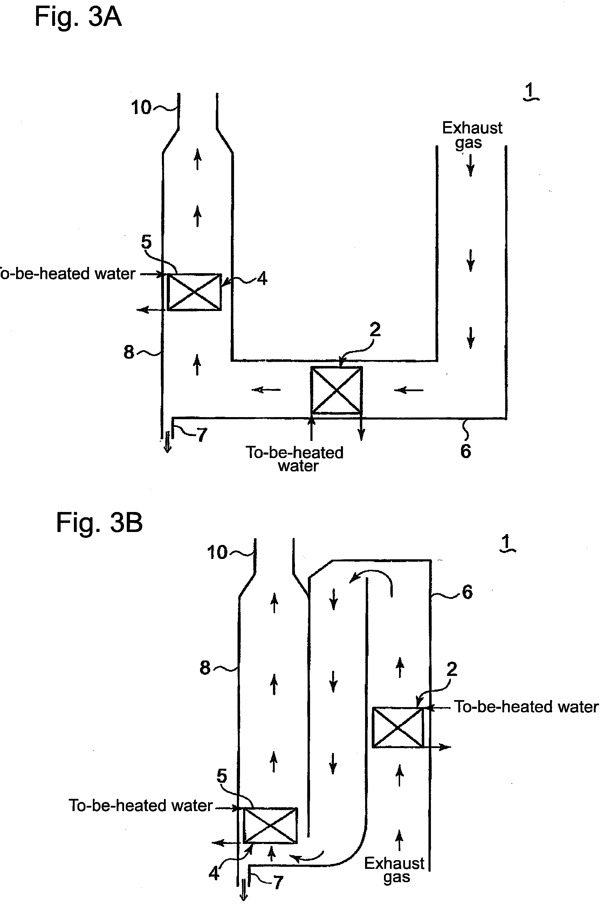

Fig. 3 is a schematic configuration diagram that shows a modified example of the device for recovering residual heat from exhaust gas according to the first embodiment, and is an example of an installation location of the dry economizer.

As an example of the installation location of the dry economizer 2, for example, the dry economizer 2 may be installed in the upstream duct 6 having the exhaust gas flow of a horizontal direction shown in Fig. 3A and may be installed in the upstream duct 6 having the exhaust gas flow of the upward flow shown in Fig. 3B.

### Second Embodiment

Next, the device for recovering residual heat from exhaust gas according to a second embodiment will be described.

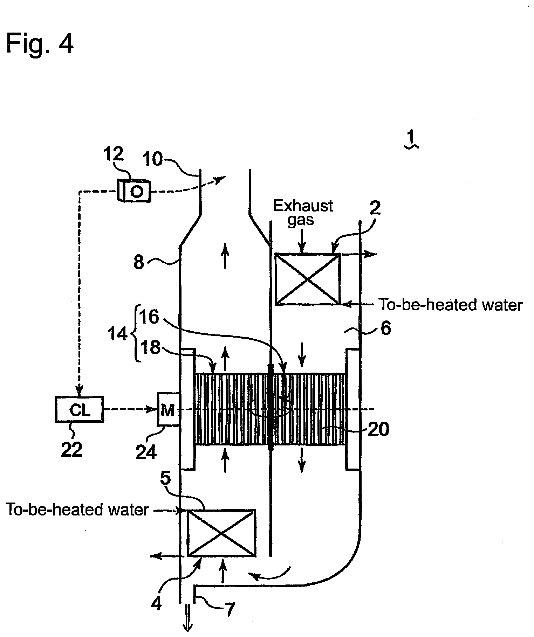

Fig. 4 is a schematic configuration diagram that illustrates a device for recovering residual heat from exhaust gas according to a second embodiment.

The device 1 for recovering residual heat according to the second embodiment has the same configuration as that of the device 1 for recovering residual heat described in the first embodiment except that white smoke to be discharged from the funnel to the atmosphere is suppressed. For that reason, the detailed description of the same configuration as that of the first embodiment will be omitted.

As shown in Fig. 4, the device 1 for recovering residual heat further includes a white-smoke detector 12, a heater 14, and a heating controller 22, besides the configuration described in Fig. 1.

The white-smoke detector 12 detects the white smoke to be discharged from the funnel 10 to the atmosphere. The white-smoke detector 12 is, for example, a remote surveillance camera provided near the funnel 10. Furthermore, the white-smoke detector 12 may be a sensor that measures the light transmittance of the exhaust gas.

The heater 14 transfers the heat of the exhaust gas of the upstream duct 6 to the downstream side of the exhaust gas flow of the condensation economizer 4, and heats the exhaust gas of the downstream side of the exhaust gas flow of the condensation economizer 4.

In the present embodiment, the heater 14 is a gas-gas heater having a heat recovery section 16 and a reheating section 18. The gas-gas heater 14 transfers the heat of the exhaust gas of the upstream duct 6 to the downstream side of the exhaust gas flow of the condensation economizer 4 by rotating a heat transfer layer plate 20 so that the heat recovery section 16 and the reheating section 18 described later are alternately situated, and heats the exhaust gas of the downstream side of the exhaust gas flow of the condensation economizer 4.

The heat recovery section 16 gives the heat transfer layer plate 20 the residual heat of the exhaust gas on the downstream side of the exhaust gas flow of the dry economizer 2 to recovery the residual heat. In this manner, the heat of the exhaust gas of the upstream duct 6 to be transferred to the downstream side of the exhaust gas flow of the condensation economizer 4 is obtained by being recovered by the heat recovery section 16. Thus, it is possible to lower the temperature of the exhaust gas of the downstream side of the exhaust gas flow of the dry economizer 2. Accordingly, the temperature of the exhaust gas is lowered before flowing in the condensation economizer 4, whereby the exhaust gas is easily condensed by the condensation economizer 4.

For example, when the temperature of the exhaust gas discharged from the dry economizer 2 is 180°C, the exhaust gas subjected to the heat recovery by the heat recovery section 16 is lowered to 60 to 80°C.

The reheating section 18 reheats the exhaust gas on the downstream side of the exhaust gas flow of the condensation economizer 4 by the residual heat recovered to the heat transfer layer plate 20 by the heat recovery section 16. Thus, it is possible to transfer the heat of the exhaust gas of the upstream duct 6 to the downstream side of the exhaust gas flow of the condensation economizer 4 and reheat the exhaust gas on the downstream side of the exhaust gas flow of the condensation economizer 4. Accordingly, it is possible to raise the temperature of the exhaust gas, lower the relative humidity of the gas after the mixture, and suppress the occurrence of white smoke.

For example, when the temperature of the exhaust gas discharged from the condensation economizer 4 is 30 to 50°C, the exhaust gas reheated by the reheating section 18 is raised to 80 to 100°C.

The heating controller 22 controls the heating state of the heater (the gas-gas heater) 14 based on the detection result of the white-smoke detector 12. In the present embodiment, the heating controller 22 may raise the rotational speed of the gas-gas heater 14:with the increase in concentration of the white smoke based on the detection result of the white-smoke detector 12. In addition, the heating controller 22 is a controller, and drives the motor 24, which rotates the heat transfer layer plate 20 of the gas-gas heater 14, based on the detection result of the white-smoke detector 12.

In this manner, since the rotational speed of the gas-gas heater 14 is raised with the increase in concentration of the white smoke based on the detection result of the white-smoke detector 12, it is possible to effectively adjust the temperature of the exhaust gas so that the white smoke is not generated.

### Third Embodiment

Next, a device for recovering residual heat according to a third embodiment will be described.

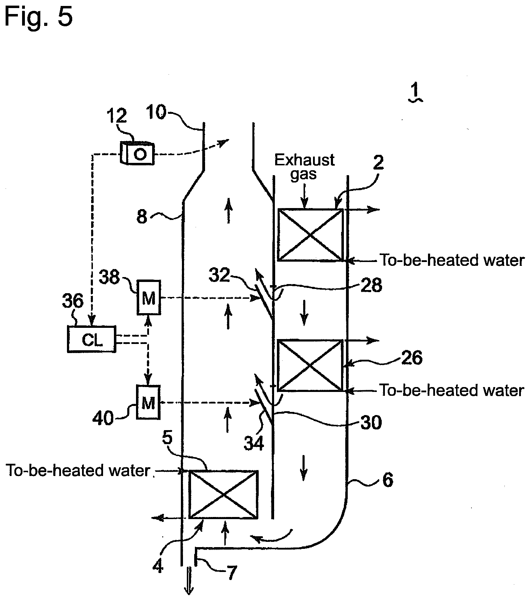

Fig. 5 is a schematic configuration diagram that illustrates a device for recovering residual heat from exhaust gas according to the third embodiment.

The device 1 for recovering residual heat from exhaust gas according to the third embodiment has the same configuration as the device 1 for recovering residual heat described in the second embodiment except that a bypass channel and a damper are provided instead of the gas-gas heater 14 as the heater, and thus, the detailed description of the same configuration will be omitted.

As shown in Fig. 5, the heater includes a bypass channel 28 and a damper 32. The bypass channel 28 connects the upstream duct 6 with the downstream duct 8, and joins a part of the exhaust gas of the upstream duct 6 on the downstream side of the exhaust gas flow of the condensation economizer 4. The damper 32 controls the flow rate of the exhaust gas of the bypass channel 28.

In this case, the heating controller 36 increases the opening amount of the damper 32 with the increase in concentration of the white smoke based on the detection result of the white-smoke detector 12. In addition, the heating controller 36 is a controller, and drives the motor 38, which operates the damper 32, based on the detection result of the white-smoke detector 12.

As a result, since it is possible to join a part of the exhaust gas of the upstream duct 6 on the downstream side of the exhaust gas flow of the condensation economizer 4, it is possible to raise the temperature of the exhaust gas of the downstream side of the exhaust gas flow of the condensation economizer 4 to suppress the occurrence of white smoke.

Furthermore, since it is possible to increase the opening amount of the damper 32 with the increase in concentration of the white smoke based on the detection result of the white-smoke detector 12, it is possible to control the flow rate of the exhaust gas of the bypass channel 28 so that the white smoke is not generated. Thus, it is possible to effectively adjust the temperature of the exhaust gas.

In addition, since the heater including the bypass channel 28 and the damper 32 has a simple structure, the equipment cost is able to be reduced.

In addition, the installation locations or the numbers of the bypass channel and the damper are not particularly limited, but the installation locations may be changed and a plurality of them may be provided. For example, in order that the exhaust gas amounts to the condensation temperature at the vicinity of the upper part 5 of the condensation economizer 4, a low temperature dry economizer separate from the dry economizer 2 may be provided, and the bypass channel and the damper may be provided on the downstream side of the low temperature dry economizer.

Specifically, as shown in Fig. 5, besides the configuration mentioned above, a low temperature dry economizer 26, a bypass channel 30, and a damper 34 may be further included.

The low temperature dry economizer 26 is arranged in the upstream duct 6 of the downstream side of the dry economizer 2 and performs the residual heat recovery of the exhaust gas in a temperature area of the temperature lower than that of the dry economizer 2. For example, when the temperature of the exhaust gas discharged from the dry economizer 2 is 180°C, the low temperature dry economizer 26 may be provided in the temperature area where the exhaust gas subjected to the residual heat recovery by the low temperature dry economizer 26 is lowered to 60 to 80°C.

By recovering the remaining residual heat of the exhaust gas discharged from the dry economizer 2 through such a low temperature dry economizer 26, it is possible to lower the temperature of the exhaust gas flowing in the condensation economizer 4 and enhance the condensation efficiency of the condensation economizer 4.

In addition, although it is not illustrated, from the viewpoint of improving the heating efficiency, an outlet to-be-heated water of the low temperature dry economizer 26 after the heat exchange may be used as an inlet to-be-heated water of the dry economizer 2 via a deaerator.

The bypass channel 30 connects the upstream duct 6 with the downstream duct 8, and joins a part of the exhaust gas of the downstream side of the low temperature dry economizer 26 on the downstream side of the exhaust gas flow of the condensation economizer 4. The damper 34 controls the flow rate of the exhaust gas of the bypass channel 30, that is, the flow rate of the exhaust subjected to the residual heat recovery by the low temperature dry economizer 26. Similarly to the damper 32 mentioned above, the opening amount of the damper 34 is increased by driving the motor 40 of the heating controller (controller) 36 with the increase in concentration of the white smoke based on the detection result of the white-smoke detector 12.

As a result, it is possible to select the temperature of the exhaust gas of the upstream duct 6 that is joined on the downstream side of the exhaust gas flow of the condensation economizer 4. For example, from the viewpoint of reliably performing the temperature control of the exhaust gas of the downstream side of the exhaust gas flow of the condensation economizer 4 so that the white smoke is not generated, a part of the exhaust gas of the downstream side of the low temperature dry economizer 26 may be joined via the bypass channel 30 and the damper 34. Furthermore, from the viewpoint of suppressing a decline in heating efficiency, as shown in Fig. 5, a part of the exhaust gas of the downstream side of the dry economizer 2 having temperature higher than that of the exhaust gas of the downstream side of the low temperature dry economizer 26 may be joined via the bypass channel 28 and the damper 32.

For example, it is needless to say that the first to third embodiments mentioned above may be suitably combined with each other.

- 1: device for recovering residual heat
- 2: dry economizer
- 4: condensation economizer
- 6: upstream damper
- 7: drain outlet
- 8: downstream duct
- 9: spray nozzle
- 10: funnel
- 11: water pipe
- 12: white-smoke detector
- 14: gas-gas heater
- 16: heat recovery section
- 18: reheating section
- 20: heat transfer layer plate
- 22: controller (heating controller)
- 26: low temperature dry economizer
- 28: bypass channel
- 30: bypass channel
- 32: damper
- 34: damper
- 36: controller (heating controller)

## Claims

1. A device (1) for recovering residual heat from exhaust gas, the device (1) comprising:
a dry economizer (2) which is configured to heat to-be-heated water by utilizing sensible heat of the exhaust gas, the dry economizer (2) being provided in a duct extending to a funnel (10) through which the exhaust gas is emitable to the atmosphere; and
a condensation economizer (4) which is configured to heat to-be-heated water by utilizing latent heat of condensation of the exhaust gas, the condensation economizer (4) being provided on a downstream side of the dry economizer (2) with respect to the flow direction of the exhaust gas flowing through the duct,
wherein the duct comprises an upstream duct (6) in which the dry economizer (2) is provided and a downstream duct (8) connected to the upstream duct (6), wherein the downstream duct (8) is configured to direct the exhaust gas to flow upwardly,
**characterized in that**
the condensation economizer (4) is arranged in the downstream duct (8) so that, during operation of the device (1), the temperature of the exhaust gas amounts to condensation temperature and vapour in the exhaust gas is condensed and becomes a condensed water in a vicinity of an upper part (5) of the condensation economizer (4), such that the generated drain falls down from vicinity of the upper part (5) of the condensation economizer (4) and comes into contact with a water pipe group constituting the condensation economizer (4), and thus, an outer wall of the water pipes is kept in a wet state from the upper part (5) of the condensation economizer (4) to a lower part.

2. The device (1) for recovering residual heat according to claim 1, further comprising:
a white-smoke detector (12) which is configured to detect white smoke of the exhaust gas emitted to the atmosphere through the funnel (10) ;
a heater (14) which is configured to heat the exhaust gas on a downstream side of the condensation economizer (4) in a flow direction of the exhaust gas by heat transfer from the exhaust gas in the upstream duct (6) to the downstream side of the condensation economizer (4); and
a heating controller (22) which is configured to control a heating condition of the heater (14) based on a detection result of the white-smoke detector (22).

3. The device (1) for recovering residual heat according to claim 2,
wherein the heater (14) is a gas heater which comprises:
a heat recovery section (16) at which residual heat of the exhaust gas can be recovered by a heat exchanger plate (20) on a downstream side of the dry economizer (2) in the flow of the exhaust gas; and
a reheating section (18) at which the exhaust gas can be reheated on the downstream side of the condensation economizer (4) by the residual heat having been recovered by means of the heat exchanger plate (20) at the heat recovery section (16), wherein the gas heater is configured to rotate the heat exchanger plate (20) so as to be placed in the heat recovery section (16) and the reheating section (16) alternately, and
wherein the heating controller (22) is configured to increase a rotational speed of the heat exchanger plate (20) with increase in concentration of the white smoke based on the detection result of the white-smoke detector (12).

4. The device (1) for recovering residual heat according to claim 2,
wherein the heater (14) comprises:
a bypass channel (28,30) through which the upstream duct (6) is in communication with the downstream duct (8) so that a portion of the exhaust gas in the upstream duct (6) can flow into the downstream side of the condensation economizer (4); and
a damper (32,34) which is configured to adjust a flow rate of the portion of the exhaust gas flowing in the bypass channel (28,30), and
wherein the heating controller (36) is configured to increase an opening amount of the damper (32,34) with increase in concentration of the white smoke based on the detection result of the white-smoke detector (12).

5. The device (1) for recovering residual heat according to any one of claims 1 to 4, further comprising:
a spray nozzle (9) which is configured to spray water to the exhaust gas flowing in the condensation economizer (4),
wherein the water sprayed to the exhaust gas by the spray nozzle (9) has a temperature between an inlet temperature and an outlet temperature of the to-be-heated water in the condensation economizer (4).

6. The device (1) for recovering residual heat according to claim 1, wherein the device (1) is configured such that the to-be-heated water flows in the dry economizer (2) and the condensation economizer (4) in a direction that faces the flow direction of the exhaust gas through the dry economizer (2) and the condensation economizer (4), respectively.

7. The device (1) for recovering residual heat according to any one of claims 1 to 4 or 6, further comprising:
a spray nozzle (9) which is configured to spray water to the exhaust gas flowing upwardly in the condensation economizer (4), wherein the spray nozzle (9) is provided on an upper part side of the condensation economizer (4).

## Patentansprüche

1. Vorrichtung (1) zur Rückgewinnung von Restwärme aus Abgas, wobei die Vorrichtung (1) umfasst:
einen Trocken-Vorwärmer (2), der ausgestaltet ist, um zu erwärmendes Wasser unter Verwendung von Eigenwärme des Abgases zu erwärmen, wobei der Trocken-Vorwärmer (2) in einem Kanal vorgesehen ist, der sich zu einem Kamin (10) erstreckt, durch den das Abgas zu der Atmosphäre ausstoßbar ist; und
einen Kondensations-Vorwärmer (4), der ausgestaltet ist, um zu erwärmendes Wasser unter Verwendung latenter Kondensationswärme des Abgases zu erwärmen, wobei der Kondensations-Vorwärmer (4) an einer stromabwärtigen Seite des Trocken-Vorwärmers (2) hinsichtlich der Strömungsrichtung des durch den Kanal strömenden Abgases angeordnet ist,
wobei der Kanal einen stromaufwärtigen Kanal (6) umfasst, in dem der Trocken-Vorwärmer (2) vorgesehen ist, und einen stromabwärtigen Kanal (8), der mit dem stromaufwärtigen Kanal (6) verbunden ist, wobei der stromabwärtige Kanal (8) ausgestaltet ist, um das Abgas nach oben strömend zu leiten
**dadurch gekennzeichnet, dass**
der Kondensations-Vorwärmer (4) in dem stromabwärtigen Kanal (8) angeordnet ist, so dass, während einem Betrieb der Vorrichtung (1), die Temperatur des Abgases der Kondensationstemperatur entspricht und Dampf in dem Abgas kondensiert wird und in einer Nähe eines oberen Teils (5) des Kondensations-Vorwärmers (4) zu einem kondensierten Wasser wird, so dass der erzeugte Abfluss von der Nähe des oberen Teils (5) des Kondensations-Vorwärmers (4) nach unten fällt und mit einer Wasserleitungsgruppe in Kontakt kommt, die den Kondensations-Vorwärmers (4) bildet, und somit eine Außenwand der Wasserleitungen von dem oberen Teil (5) des Kondensations-Vorwärmers (4) zu einem unteren Teil in einem feuchten Zustand gehalten ist.

2. Vorrichtung (1) zur Rückgewinnung von Restwärme gemäß Anspruch 1, ferner umfassend:
einen Weißrauchdetektor (12), der ausgestaltet ist, um Weißrauch des Abgases zu erfassen, das durch den Kamin (10) in die Atmosphäre ausgestoßen wird,
eine Heizeinrichtung (14), die ausgestaltet ist, um das Abgas an einer stromabwärtigen Seite des Kondensations-Vorwärmers (4) in einer Strömungsrichtung des Abgases durch Wärmeübertragung von dem Abgas in dem stromaufwärtigen Kanal (6) zu der stromabwärtigen Seite des Kondensations-Vorwärmers (4) zu erwärmen, und
eine Heizsteuerung (22), die ausgestaltet ist, um einen Heizzustand der Heizeinrichtung (14) basierend auf einem Erfassungsergebnis des Weißrauchdetektors (22) zu steuern.

3. Vorrichtung (1) zur Rückgewinnung von Restwärme gemäß Anspruch 2,
wobei die Heizeinrichtung (14) eine Gasheizeinrichtung ist, wobei die Gasheizeinrichtung umfasst:
einen Wärmerückgewinnungsbereich (16), an dem Restwärme des Abgases durch eine Wärmetauscherplatte (20) an einer stromabwärtigen Seite des Trocken-Vorwärmers (2) in der Strömung des Abgases wiedergewonnen werden kann, und
einen Wiedererwärmungsbereich (18), an dem das Abgas an der stromabwärtigen Seite des Kondensations-Vorwärmers (4) durch die Restwärme, die mittels der Wärmetauscherplatte (20) an dem Wärmerückgewinnungsbereich (16) zurückgewonnen ist, wiedererwärmt sein kann, wobei die Gasheizeinrichtung ausgestaltet ist, um die Wärmetauscherplatte (20) so zu drehen, dass sie abwechselnd in dem Wärmerückgewinnungsbereich (16) und dem Wiedererwärmungsbereich (16) angeordnet ist,
wobei die Heizsteuerung (22) ausgestaltet ist, um eine Drehzahl der Wärmetauscherplatte (20) mit zunehmender Konzentration des Weißrauchs auf der Grundlage des Erfassungsergebnisses des Weißrauchdetektors (12) zu erhöhen.

4. Vorrichtung (1) zur Rückgewinnung von Restwärme gemäß Anspruch 2,
wobei die Heizeinrichtung (14) umfasst:
einen Bypasskanal (28,30), durch den der stromaufwärtige Kanal (6) mit dem stromabwärtigen Kanal (8) in Verbindung steht, so dass ein Teil des Abgases in dem stromaufwärtigen Kanal (6) in die stromabwärtige Seite des Kondensations-Vorwärmers (4) strömen kann, und
eine Drosselklappe (32,34), die ausgestaltet ist, um eine Strömungsrate des im Bypasskanal (28,30) strömenden Teils des Abgases einzustellen, und
wobei die Heizsteuerung (36) ausgestaltet ist, um einen Öffnungswert der Drosselklappe (32,34) mit einer Konzentrationszunahme des Weißrauches auf der Grundlage des Erfassungsergebnisses des Weißrauchdetektors (12) zu erhöhen.

5. Vorrichtung (1) zur Rückgewinnung von Restwärme gemäß einem der Ansprüche 1 bis 4, ferner umfassend:
eine Sprühdüse (9), die ausgestaltet ist, um Wasser in das im Kondensations-Vorwärmer (4) strömende Abgas zu sprühen,
wobei das von der Sprühdüse (9) zu dem Abgas gesprühte Wasser eine Temperatur zwischen einer Einlasstemperatur und einer Auslasstemperatur des zu erwärmenden Wassers in dem Kondensations-Vorwärmer (4) aufweist.

6. Vorrichtung (1) zur Rückgewinnung von Restwärme gemäß einem der Ansprüche 1 bis 5, wobei die Vorrichtung (1) derart ausgestaltet ist, dass das zu erwärmende Wasser in dem Trocken-Vorwärmer (2) und in dem Kondensations-Vorwärmer (4) in einer Strömungsrichtung strömt, die jeweils der Strömungsrichtung des Abgases durch den Trocken-Vorwärmer (2) und den Kondensations-Vorwärmer (4) zugewandt ist.

7. Vorrichtung (1) zur Rückgewinnung von Restwärme gemäß einem der Ansprüche 1 bis 4 oder 6, ferner umfassend:
eine Sprühdüse (9), die ausgestaltet ist, um Wasser zu dem im Kondensations-Vorwärmer (4) nach oben strömenden Abgas zu sprühen, wobei die Sprühdüse (9) an einer oberen Teilseite des Kondensations-Vorwärmers (4) vorgesehen ist.

## Revendications

1. Dispositif (1) de récupération de chaleur résiduelle d'effluent gazeux, le dispositif (1) comprenant :
un économiseur (2) par voie sèche, qui est configuré pour chauffer de l'eau à chauffer, en utilisant de la chaleur sensible de l'effluent gazeux, l'économiseur (2) par voie sèche étant prévu dans un conduit allant vers une cheminée (10) par lequel l'effluent gazeux peut être envoyé à l'atmosphère et
un économiseur (4) de condensation, qui est configuré pour chauffer d'eau à chauffer, en utilisant de la chaleur latente de condensation de l'effluent gazeux, l'économiseur (4) de condensation étant prévu en aval de l'économiseur (2) par voie sèche par rapport au sens de passage de l'effluent gazeux dans le conduit,
dans lequel le conduit comprend un conduit (6) amont, dans lequel l'économiseur (2) par voie sèche est prévu et un conduit (8) aval, relié au conduit (6) amont, le conduit (8) aval étant configuré pour faire passer l'effluent gazeux vers le haut,
**caractérisé en ce que**
l'économiseur (4) de condensation est disposé dans le conduit (8) aval, de manière à ce que, pendant un fonctionnement du dispositif (1), la température de l'effluent gazeux s'élève à la température de condensation et de manière à ce que de la vapeur de l'effluent gazeux soit condensée et devienne de l'eau condensée à proximité d'une partie (5) supérieure de l'économiseur (4) de condensation, de manière à ce que la purge produite tombe du voisinage de la partie (5) supérieure de l'économiseur (4) de condensation et arrive en contact avec un groupe de tuyaux pour de l'eau constituant l'économiseur (4) de condensation, et ainsi, une paroi extérieure des tuyaux pour de l'eau est maintenue dans un état humide, de la partie (5) supérieure de l'économiseur (4) de condensation à une partie inférieure.

2. Dispositif (1) de récupération de chaleur résiduelle suivant la revendication 1, comprenant, en outre :
un détecteur (12) de fumée blanche, qui est configuré pour détecter de la fumée blanche de l'effluent gazeux émise à l'atmosphère par la cheminée (10);
un dispositif (14) de chauffage, qui est configuré pour chauffer l'effluent gazeux, en aval de l'économiseur (4) de condensation dans le sens de passage de l'effluent gazeux, par transfert de chaleur de l'effluent gazeux dans le conduit (6) amont au côté en aval de l'économiseur (4) de condensation; et
une unité (22) de commande de chauffage, qui est configurée pour commander un état de chauffage du dispositif (14) de chauffage sur la base d'un résultat de détection du détecteur (22) de fumée blanche.

3. Dispositif (1) de récupération de chaleur résiduelle suivant la revendication 2,
dans lequel le dispositif (14) de chauffage est un dispositif de chauffage de gaz, qui comprend :
une partie (16) de récupération de chaleur où de la chaleur résiduelle de l'effluent gazeux peut être récupérée par une plaque (20) formant échangeur de chaleur, d'un côté en aval de l'économiseur (2) par voie sèche dans le sens de passage de l'effluent gazeux; et
une partie (18) de réchauffage où l'effluent gazeux peut être réchauffé, du côté en aval de l'économiseur (4) de condensation, par la chaleur résiduelle ayant été récupérée au moyen de la plaque (20) formant échangeur de chaleur à la partie (16) de récupération de chaleur, le dispositif de chauffage de gaz étant configuré pour faire tourner la plaque (20) formant échangeur de chaleur, de manière à le placer en alternance dans la partie (16) de récupération de la chaleur et dans la partie (16) de réchauffage et
dans lequel l'unité (22) de commande de chauffage est configurée pour augmenter une vitesse de rotation de la plaque (20) formant échangeur de chaleur au fur et à mesure qu'augmente la concentration de la fumée blanche sur la base du résultat de détection du détecteur (12) de fumée blanche.

4. Dispositif (1) de récupération de chaleur résiduelle suivant la revendication 2,
dans lequel le dispositif (14) de chauffage comprend :
un canal (28, 30) de dérivation, par lequel le conduit (6) amont est en communication avec le conduit (8) aval, de manière à ce qu'une partie de l'effluent gazeux, dans le conduit (6) amont, puisse passer dans le côté en aval de l'économiseur (4) de condensation; et
un registre (32, 34), qui est configuré pour régler un débit de la partie de l'effluent gazeux passant dans le canal (28, 30) de dérivation et
dans lequel l'unité (36) de commande de chauffage est configurée pour augmenter un degré d'ouverture du registre (32, 34) au fur et à mesure qu'augmente la concentration de la fumée blanche sur la base du résultat de détection du détecteur (12) de fumée blanche.

5. Dispositif (1) de récupération de chaleur résiduelle suivant l'une quelconque des revendications 1 à 4, comprenant, en outre :
une buse (9) de projection, qui est configurée pour projeter de l'eau sur l'effluent gazeux passant dans l'économiseur (4) de combustion;
dans lequel l'eau projetée sur l'effluent gazeux par la buse (9) de projection a une température comprise entre une température d'entrée et une température de sortie de l'eau à chauffer dans l'économiseur (4) de condensation.

6. Dispositif (1) de récupération de chaleur résiduelle suivant la revendication 1, dans lequel le dispositif (1) est configuré de manière à ce que l'eau à chauffer s'écoule dans l'économiseur (2) par voie sèche et dans l'économiseur (4) de condensation dans un sens, qui et contraire au sens de passage de l'effluent gazeux dans l'économiseur (2) par voie sèche et dans l'économiseur (4) de condensation, respectivement.

7. Dispositif (1) de récupération de chaleur résiduelle suivant l'une quelconque des revendications 1 à 4 ou 6, comprenant, en outre :
une buse (9) de projection, qui est configurée pour projeter de l'eau sur l'effluent gazeux montant dans l'économiseur (4) de condensation, la buse (9) de projection étant prévue sur un côté de partie supérieure de l'économiseur (4) de condensation.
